# EUROPÄISCHE PATENTSCHRIFT

(11) **EP 3 621 855 B1**
(45) Veröffentlichungstag und Bekanntmachung des Hinweises auf die Patenterteilung: **06.07.2022**
(21) Anmeldenummer: 18725435.4
(22) Anmeldetag: 08.05.2018
(51) Int. Cl.: B60R 25/0215

(54) **VERRIEGELUNGSEINRICHTUNG, INSBESONDERE FÜR EIN KRAFTFAHRZEUG**
LOCKING DEVICE, IN PARTICULAR FOR A MOTOR VEHICLE
DISPOSITIF DE VERROUILLAGE, EN PARTICULIER POUR UN VÉHICULE À MOTEUR

(30) Priorität: 11.05.2017 DE 102017004505
(43) Veröffentlichungstag der Anmeldung: 18.03.2020
(73) Patentinhaber: Marquardt GmbH, 78604 Rietheim-Weilheim (DE)
(72) Erfinder: KAPLAN, Ali, 78604 Rietheim-Weilheim (DE); PARAPPUR KIZHUVEETUVALAPPIL, Midhun, Malappuram Kerala 679574 (IN)
(74) Vertreter: Jostarndt Patentanwalts-AG
(86) Internationale Anmeldenummer: PCT/EP2018/061798
(87) Internationale Veröffentlichungsnummer: WO 2018/206546

(56) Entgegenhaltungen:
- EP-A1- 2 070 781
- EP-A1- 2 700 545
- EP-A2- 1 176 065
- WO-A1-99/14085
- DE-A1- 10 356 660
- US-A1- 2012 101 686

## Beschreibung

Die Erfindung betrifft eine Verriegelungseinrichtung nach dem Oberbegriff des Patentanspruchs 1.

Derartige Verriegelungseinrichtungen dienen als Lenkungsverriegelung zum Verriegeln der Lenksäule in einem Kraftfahrzeug, genauer gesagt der Lenkwelle für das Lenkrad, um den Diebstahlschutz zu erhöhen. Sie werden beispielsweise bei Betätigung des Zündschlosses und/oder durch Ansteuerung von einem Steuergerät im Kraftfahrzeug ver- und/oder entriegelt. Anstelle der Lenkradsäule kann auch ein sonstiges funktionsrelevantes Bauteil des Kraftfahrzeugs, beispielsweise der Getriebeschalthebel o. dgl., verriegelbar sein.

In Kraftfahrzeugen kann anstelle eines mechanischen Zündschlosses ein elektronisches Zündschloss verwendet werden, das mittels eines elektronischen Schlüssels betätigbar ist. Zur näheren Ausgestaltung eines solchen elektronischen Zündschlosses wird auf die DE 44 34 587 A1 verwiesen. Des Weiteren können in Kraftfahrzeugen auch Fahrberechtigungssysteme mit einer "KeylessGo"-Funktionalität zum Einsatz kommen, bei denen die Authentifikation des elektronischen Schlüssels durch eine Codeübertragung mittels elektromagnetischer Wellen selbsttätig erfolgt, wenn der Benutzer sich innerhalb des Kraftfahrzeugs befindet und beispielsweise eine Start/Stop-Taste im Armaturenbrett betätigt.

Bei einem elektronischen Zündschloss und/oder einem Fahrberechtigungssystem mit KeylessGo-Funktionalität kann in vorteilhafter Weise die Lenkungsverriegelung durch einen Antrieb, beispielsweise einen Elektromotor, angetrieben werden. Der Elektromotor wird nur dann zur Entriegelung angesteuert, wenn die codierten Daten des elektronischen Schlüssels richtig sind, d.h. wenn der zum Kraftfahrzeug zugehörige Schlüssel erkannt wird. Es handelt sich bei einer derartigen Lenkungsverriegelung um eine sogenannte elektrische und/oder elektronische Lenkungsverriegelung.

Eine solche Verriegelungseinrichtung besitzt ein zwischen einer ersten und einer zweiten Position bewegbares Sperrglied zur Verriegelung des funktionsrelevanten Bauteils. Das Sperrglied steht in der ersten Position in blockierenden Eingriff mit dem Bauteil und/oder ist in der ersten Position in blockierenden Eingriff mit dem Bauteil bringbar. In der zweiten Position steht das Sperrglied außer Eingriff mit dem Bauteil. Ein Antriebselement dient für die Bewegung des Sperrglieds zwischen den beiden Positionen. Des Weiteren weist die bisherige Verriegelungseinrichtung zwei, in jeweils einer der beiden Positionen wirkende Sicherungsmittel für das Sperrglied auf. Die Ausgestaltung der Verriegelungseinrichtung erscheint aufwändig.

Weiterer Stand der Technik wird in den Druckschriften DE 103 56 660 A1, EP 2 700 545 A1, WO 99/14085 A1 und EP 1 176 065 offenbart.

Der Erfindung liegt die Aufgabe zugrunde, die Verriegelungseinrichtung im Hinblick auf das Sicherungsmittel weiterzuentwickeln. Insbesondere soll das Sicherungsmittel einfach ausgestaltet sein und/oder wenig Bauraum in der Verriegelungseinrichtung beanspruchen.

Diese Aufgabe wird bei einer gattungsgemäßen Verriegelungseinrichtung durch die kennzeichnenden Merkmale des Anspruchs 1 gelöst.

Bei der erfindungsgemäßen Verriegelungseinrichtung ist das Sicherungsmittel sowohl zur Zusammenwirkung mit dem Sperrglied in der ersten Position als auch zur Zusammenwirkung mit dem Sperrglied in der zweiten Position ausgebildet. Insbesondere dient und/oder wirkt das Sicherungsmittel in der Art einer Rückdrücksicherung für das in der ersten Position befindliche Sperrglied zur Verhinderung von Manipulationen sowie in der Art einer Sicherungseinrichtung zum Sichern des Sperrglieds in der zweiten Position gegen dessen unbeabsichtigte Bewegung in die erste Position. Es ist somit festzustellen, dass in vorteilhafter Weise das eine Sicherungsmittel zwei Funktionalitäten bedient, so dass die Erfindung eine erhebliche Vereinfachung der Verriegelungseinrichtung und/oder eine Bauraumreduzierung für die Verriegelungseinrichtung erzielt. Weitere Ausgestaltungen der Erfindung sind Gegenstand der Unteransprüche.

Zum Schutz der Verriegelungseinrichtung vor Fremdeinwirkungen kann ein Gehäuse vorgesehen sein. In zweckmäßiger Weise kann das Gehäuse einen Sockel umfassen, wobei das Sperrglied im Sockel bewegbar geführt sein kann. Zwecks Schutz vor Manipulationen, insbesondere im Hinblick auf den Diebstahlschutz, kann der Sockel aus Metall bestehen. Ebenso kann es sich anbieten, dass das Sperrglied der guten Widerstandsfähigkeit halber aus Metall besteht.

In funktionssicherer Art und Weise kann das Antriebselement in der Art eines Schneckenrades ausgebildet sein. Weiterhin kann es sich anbieten, dass eine Hubkurve am Antriebselement befindlich ist. Dabei kann das Sperrglied mittels eines Zapfens in die Hubkurve eingreifen, derart dass bei Antrieb des Antriebselements das Sperrglied zwischen den beiden Positionen bewegbar ist. In einfacher Ausgestaltung kann ein Elektromotor zum Antrieb, insbesondere zur Drehung, des Antriebselements vorgesehen sein. Bei dem Elektromotor kann es sich um einen Gleichstrommotor handeln.

In kompakter Ausgestaltung der Erfindung sind zwei Aufnahmen im Sperrglied für das Zusammenwirken des Sicherungsmittels mit dem Sperrglied vorgesehen. Insbesondere ist jeweils eine Aufnahme zum Einrasten des Sicherungsmittels in der jeweiligen Position vorgesehen, derart dass die Bewegung des Sperrglieds in der jeweiligen Position mittels des Sicherungsmittels blockiert ist. In einfacher Art und Weise kann das Sicherungsmittel in der Art eines Schiebers ausgebildet sein. Des Weiteren kann das Sicherungsmittel mittels eines elastischen Elements, insbesondere mittels einer Feder, mit einer in Richtung zur Aufnahme wirkenden Kraft belastet sein. In kompakter Ausgestaltung kann das Sicherungsmittel in einer Führung im Sockel beweglich angeordnet sein. Zwecks hoher Widerstandsfähigkeit gegen Manipulationen kann das Sicherungsmittel aus Metall bestehen.

In einfacher sowie auch kompakter Ausgestaltung ist erfindungsgemäß eine Kulisse am Antriebselement für die Bewegung des Sicherungsmittels gegen die vom elastischen Element bewirkte Federkraft aus der Aufnahme und/oder zur Freigabe der Bewegung des Sicherungsmittels mittels der vom elastischen Element bewirkten Kraft in die Aufnahme vorgesehen sein. In kompakter sowie funktionssicherer Art und Weise kann das Antriebselement in etwa zylinderförmig mit einer ersten Deckelfläche, einer zweiten Deckelfläche sowie einer zwischen den beiden Deckelflächen befindlichen Mantelfläche ausgestaltet sein. Dabei kann die Hubkurve an der Mantelfläche befindlich sein. Des Weiteren kann die Kulisse an der zweiten Deckelfläche befindlich sein. Das Sicherungsmittel kann wiederum mittels eines Nockens in die Kulisse eingreifen.

Schließlich kann ein mit dem Antriebselement zusammenwirkendes Signalerzeugungsmittel für die jeweilige Position des Sperrglieds vorgesehen sein, so dass die jeweils vom Sperrglied eingenommene Position detektiert werden kann. In funktionssicherer und dennoch einfacher Art und Weise kann das Signalerzeugungsmittel aus einem Magnet sowie einem Hallsensor bestehen. Der Magnet kann wiederum in kompakter Weise im und/oder am Antriebselement angeordnet sein.

Für eine besonders bevorzugte Ausgestaltung der erfindungsgemäßen Verriegelungseinrichtung ist nachfolgendes festzustellen.

Die bisherigen Verriegelungseinrichtungen sehen für die Rückdrücksicherung des Sperrgliedes sowie für die Sicherung des Sperrgliedes jeweils separate Konzepte vor. Diese Konzepte weisen eine komplexe Mechanik auf, welche zudem viel Bauraum benötigt. Daher soll die Komplexität vereinfacht sowie die Wirksamkeit durch das erfindungsgemäße Konzept gesteigert und/oder die Kosten für die Verriegelungseinrichtung sollen verringert werden. Hierzu schlägt die Erfindung die Kombination der Rückdrücksicherung und der Sperrgliedsicherung mittels eines Schiebers, der mittels eines Exzenters bewegt wird, anstelle von individuellen Konzepten für die einzelnen Funktionalitäten vor. Der Schieber bewirkt damit die beiden Funktionalitäten Sicherheit und Diebstahlschutz für die Verriegelungseinrichtung gleichzeitig, d.h. der Schieber bietet die Rückdrücksicherung entsprechend den Thatcham-Anforderungen sowie die Sicherungsfunktion für das Sperrglied.

Zur Bewegung des Sperrglieds dient ein mittels eines DC(Gleichstrom)-Motors angetriebenes Schneckenrad. Am Schneckenrad befindet sich ein Exzenter-Profil zum Antrieb des Schiebers in dessen Stellungen entsprechend der Bewegung des Schneckenrads.

Es sind zwei Aufnahmen, nämlich Aufnahme 1 (Sperrglied verriegelt) und Aufnahme 2 (Sperrglied entriegelt), in der Art von Taschen im Sperrglied an der Stelle vorgesehen, an der der Schieber in der jeweiligen Position des Sperrgliedes mit dem Sperrglied zusammenwirkt. Der Schieber ist mittels einer Druckfeder beaufschlagt. Bewegt sich das Sperrglied in die verriegelte Position, so ist die Aufnahme 1 auf die Achse des Schiebers ausgerichtet und der Schieber bewegt sich durch die Kraft der Druckfeder in die Aufnahme 1. Dadurch ist die Bewegung des Sperrglieds in die entriegelte Position aufgrund von Manipulationen verhindert. Diese Bewegung ist lediglich bei ordnungsgemäßer Ansteuerung der Verriegelungseinrichtung durch Drehung des Schneckenrades ermöglicht. In entsprechender Weise ist bei Bewegung des Sperrgliedes und dessen Erreichen der entriegelten Position der Schieber auf die Aufnahme 2 ausgerichtet. Aufgrund der Federkraft bewegt sich dann der Schieber nach vorne in die Aufnahme 2. Dadurch ist dann die Rückbewegung des Sperrgliedes in die verriegelte Position verhindert, so dass das Sperrglied gegen eine fehlerhafte Bewegung gesichert ist. Zwischen den beiden Positionen des Sperrgliedes, nämlich Verriegelung und Entriegelung, wird der Schieber vom Sperrglied mittels des Exzenter-Profils im Schneckenrad wegbewegt, womit eine Behinderung des Sperrgliedes selbst bei einer Fehlfunktion ausgeschlossen ist.

Geschaffen ist mittels der Erfindung somit ein multifunktionales Konzept für den Schieber in der Verriegelungseinrichtung, und zwar zur Erzielung der Rückdrücksicherung sowie der Sicherungsfunktion für das Sperrglied.

Die mit der Erfindung erzielten Vorteile bestehen insbesondere darin, dass das eine Sicherungsmittel gleichzeitig mehrere Funktionalitäten für die Verriegelungseinrichtung bewirkt. Dadurch ist die Verriegelungseinrichtung kompakt ausgestaltet, benötigt wenig Bauraum und besitzt ein geringeres Gewicht. Außerdem lässt sich dadurch eine Reduktion der Herstellkosten für die Verriegelungseinrichtung erzielen.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein Lenkrad eines Kraftfahrzeugs mit einer Verriegelungseinrichtung in schematischer Darstellung,
- Fig. 2: einen Teil der Verriegelungseinrichtung aus Fig. 1 in Explosionsdarstellung, wobei die Verriegelungseinrichtung ein Sperrglied, ein Antriebselement sowie ein Sicherungsmittel aufweist,
- Fig. 3: das Sperrglied aus Fig. 2 als Einzelteil,
- Fig. 4: das Antriebselement aus Fig. 2 als Einzelteil,
- Fig. 5: das Sperrglied, das Antriebselement und das Sicherungsmittels aus Fig. 2 als Einzelteile,
- Fig. 6: das Zusammenwirken des Antriebselements mit dem Sperrglied und mit dem Sicherungsmittel,
- Fig. 7: das Antriebselement wie in Fig. 4 in einer weiteren Drehstellung,
- Fig. 8: einen Schnitt durch die Anordnung aus Fig. 6, wobei das Sperrglied in einer ersten Position befindlich ist,
- Fig. 9: einen Schnitt wie in Fig. 8, wobei das Sperrglied zwischen der ersten und einer zweiten Position befindlich ist, und
- Fig. 10: einen Schnitt wie in Fig. 8, wobei das Sperrglied in der zweiten Position befindlich ist.

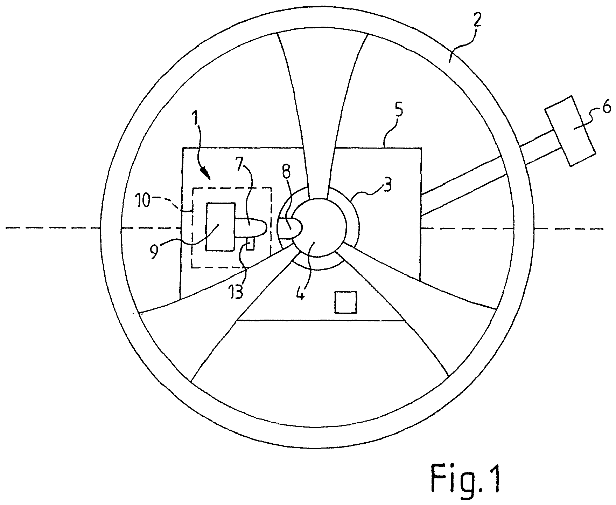

In Fig. 1 ist ein Lenkrad 2 mit einer Lenkradsäule 3 für ein Kraftfahrzeug zu sehen. In der Lenkradsäule 3 befindet sich die mit dem Lenkrad 2 in Verbindung stehende Lenkwelle 4. An der Lenkradsäule 3 ist in üblicher Weise eine Trägeranordnung 5 in der Art eines Lenkmoduls mit einem Lenkstockschalter 6 angeordnet. In der Nähe des Lenkrades 2 ist eine als elektrische Lenkungsverriegelung ausgebildete Verriegelungseinrichtung 1 an geeigneter Stelle an der Lenkradsäule 3 angeordnet, wobei die Verriegelungseinrichtung 1 schematisch sowie in teilweise aufgebrochener Darstellung gezeigt ist.

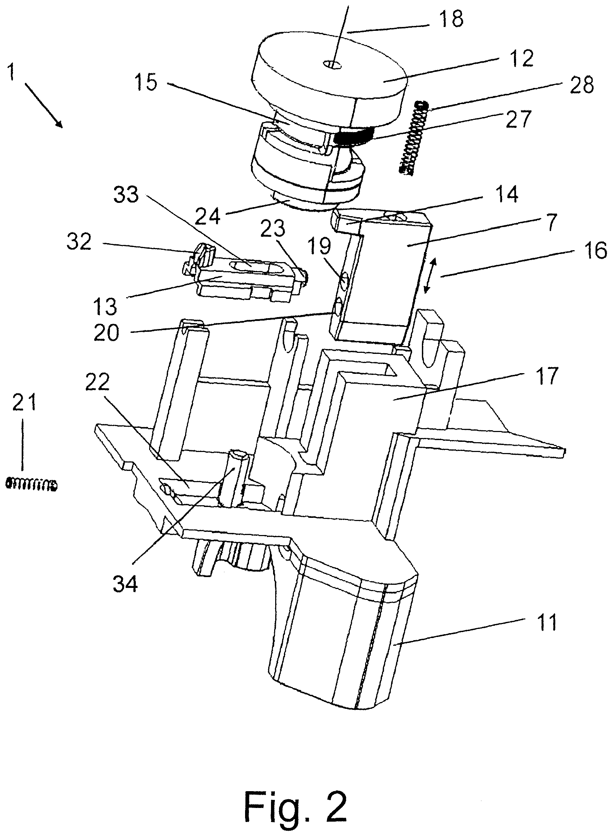

Die Verriegelungseinrichtung 1 besitzt ein zwischen zwei Positionen bewegbares, mit der Kraft einer Druckfeder 28 (siehe Fig. 2) beaufschlagtes Sperrglied 7. Das Sperrglied 7 ist entsprechend einer ersten Position in eine Einrastposition 8 an der Lenkwelle 4 in der Lenkradsäule 3 bringbar, so dass das Sperrglied 7 in blockierenden Eingriff mit der Lenkwelle 4 steht. Somit ist dann das Lenkrad 2 blockiert und kann daher nicht gedreht werden. Das Sperrglied 7 steht in einer zweiten Position außer verriegelnden bzw. blockierenden Eingriff mit der Einrastposition 8 an der Lenkwelle 4, womit das Lenkrad 2 zur Drehung freigegeben ist. In Fig. 1 ist lediglich eine Einrastposition 8 gezeigt, es können jedoch auch mehrere Einrastpositionen 8 in der Art eines Zahnkranzes an der Lenkwelle 4 in der Lenkradsäule 3 zur Blockierung der Drehbewegung der Lenkwelle 4 vorgesehen sein, damit der verriegelnde Eingriff des Sperrglieds 7 in unterschiedlichen Stellungen des Lenkrads 2 ermöglicht ist. Die Verriegelungseinrichtung 1 besitzt weiter einen Antrieb 9 für die Bewegung des Sperrglieds 7 zwischen den beiden Positionen. Schließlich ist für die Verriegelungseinrichtung 1 noch ein Gehäuse 10 vorgesehen.

Teile der elektrischen Lenkungsverriegelung 1 sind in Explosionsdarstellung näher in Fig. 2 zu sehen. Das Gehäuse 10 umfasst einen Sockel 11 sowie einen Deckel, wobei in Fig. 2 der Deckel weggelassen ist. Der Sockel 11 besteht aus widerstandsfähigem Metall, beispielsweise aus Zinkdruckguss. Der Deckel kann ebenfalls aus Metall bestehen, gegebenenfalls ist es jedoch auch ausreichend, wenn der Deckel aus thermoplastischem Kunststoff mittels Spritzgießen hergestellt ist. Der Antrieb 9 umfasst einen nicht weiter gezeigten Elektromotor sowie ein Antriebselement 12 zur Bewegung des Sperrglieds 7, wobei das Sperrglied 7 in einem Führungsansatz 17 im Sockel 11 bewegbar geführt ist.

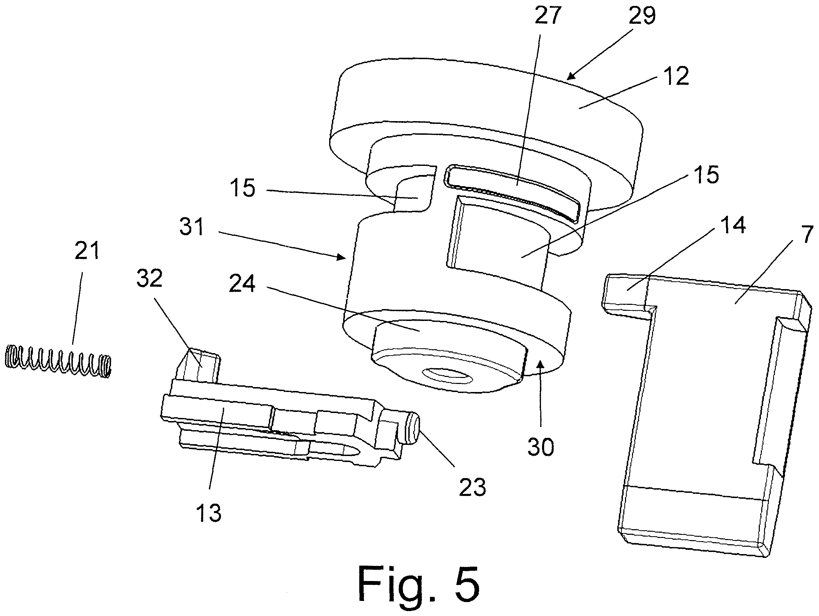

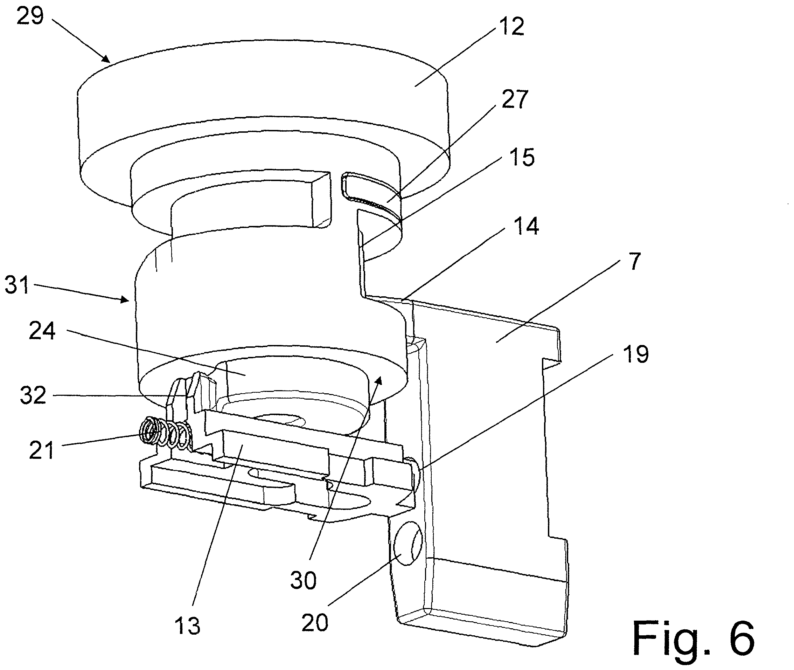

Vorliegend ist das Antriebselement 12 als ein Schneckenrad ausgestaltet. Und zwar ist das Schneckenrad 12 in etwa zylinderförmig mit einer oberen, ersten Deckelfläche 29 und einer unteren, zweiten Deckelfläche 30 sowie einer zwischen den beiden Deckelflächen 29, 30 befindlichen Mantelfläche 31 ausgestaltet, wie näher der Fig. 5 zu entnehmen ist. Das Schneckenrad 12 besitzt an dessen Umfang, beispielsweise an der ersten Deckelfläche 29, eine nicht weiter gezeigte Verzahnung, mit der eine Schnecke an der Abtriebswelle des Elektromotors kämmt, so dass das Schneckenrad 12 um eine Drehachse 18 mittels des Elektromotors drehbar ist. Das Sperrglied 7 ist am Schneckenrad 12 angelenkt, und zwar greift hierzu ein Zapfen 14 am Sperrglied 7 in eine am Umfang des Schneckenrades 12, nämlich an der Mantelfläche 31, befindliche Hubkurve 15 ein, wie weiter der Fig. 5 sowie der Fig. 6 zu entnehmen ist. Dadurch ist entsprechend der Fig. 2 das am Schneckenrad 12 angeordnete Sperrglied 7 durch Drehung des Schneckenrades 12 mittels des Elektromotors in die jeweilige Drehrichtung translatorisch in Richtung der Drehachse 18 von der ersten in die zweite Position sowie von der zweiten in die erste Position, also zwischen der ersten sowie der zweiten Position gemäß dem Doppelpfeil 16, bewegbar.

Des Weiteren ist ein Sicherungsmittel 13 für das Sperrglied 7 vorgesehen. Das Sicherungsmittel 13 ist sowohl zur Zusammenwirkung mit dem Sperrglied 7 in der ersten Position als auch zur Zusammenwirkung mit dem Sperrglied 7 in der zweiten Position ausgebildet. Und zwar wirkt das Sicherungsmittel 13 zum einen in der Art einer Rückdrücksicherung für das in der ersten Position befindliche Sperrglied 7 zur Verhinderung von Manipulationen, womit der Diebstahlschutz verbessert ist. Zum anderen wirkt das Sicherungsmittel 13 in der Art einer Sicherungseinrichtung zum Sichern des Sperrglieds 7 in der zweiten Position gegen unbeabsichtigte Bewegung in die erste Position aufgrund einer Fehlfunktion, womit die Sicherheit des Benutzers vor Gefährdungen verbessert ist.

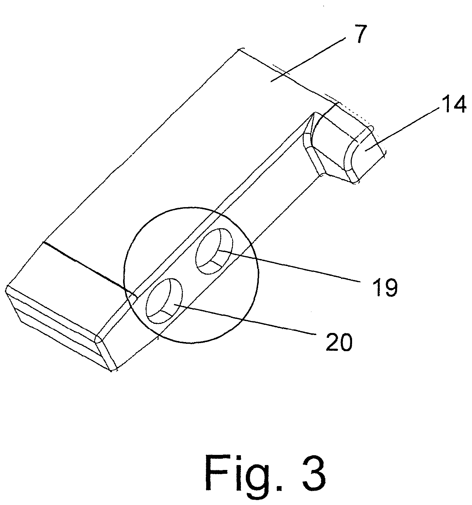

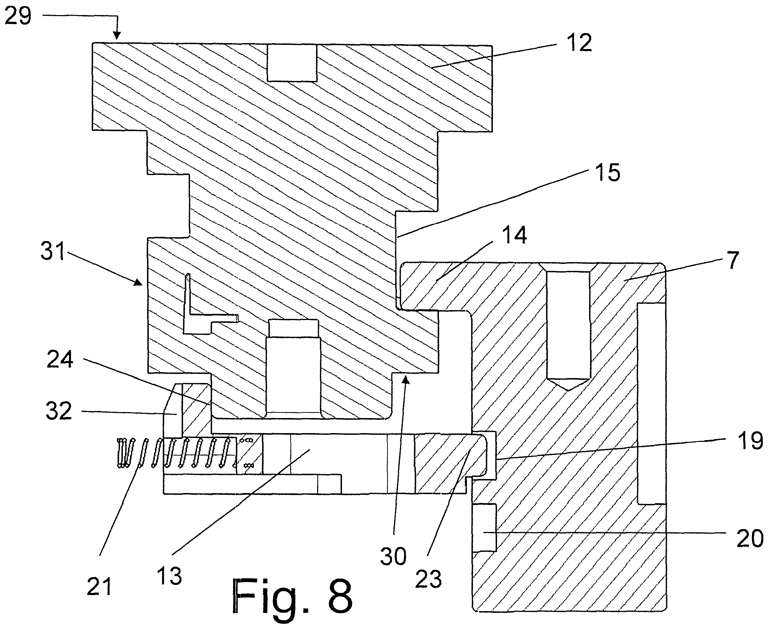

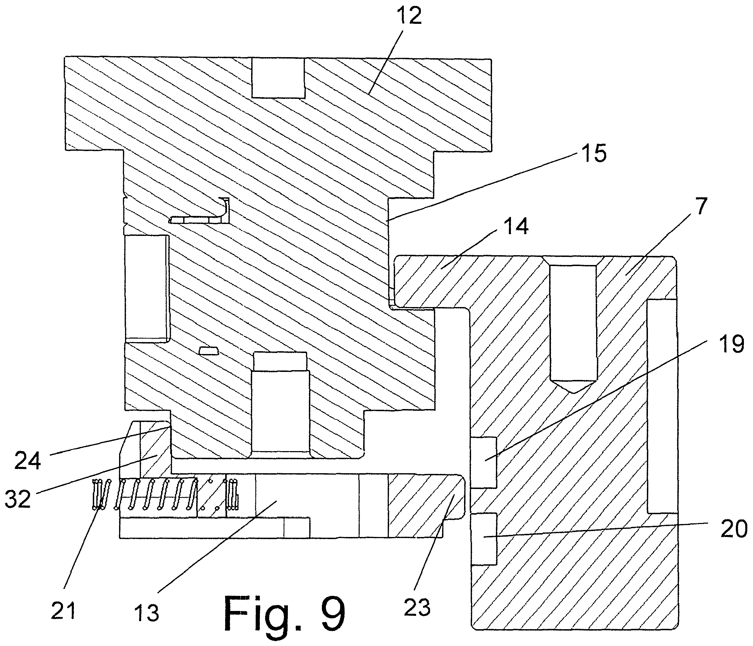

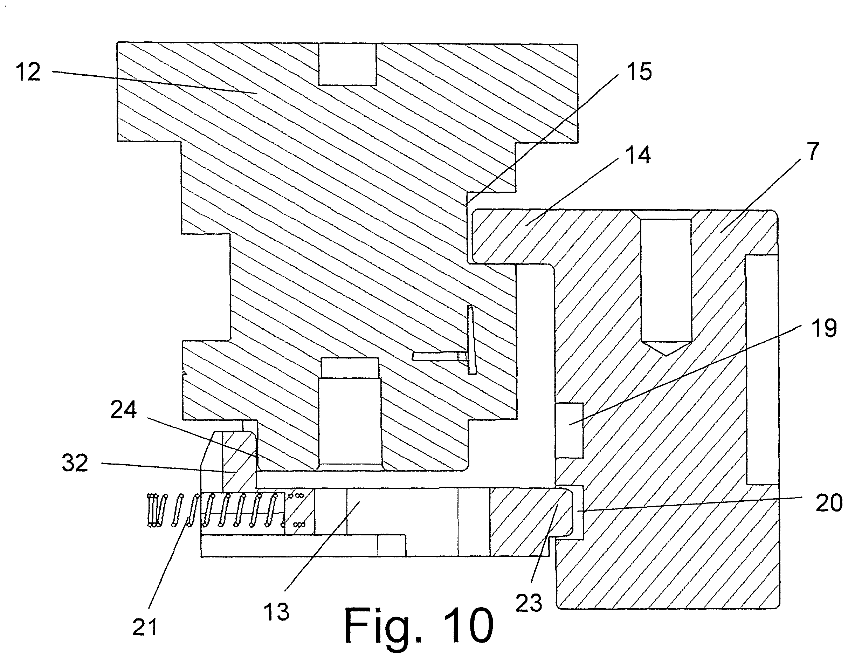

Für das Zusammenwirken des Sicherungsmittels 13 mit dem Sperrglied 7 sind zwei, in Fig. 3 sichtbare Aufnahmen 19, 20 im Sperrglied 7 vorgesehen. Jeweils eine Aufnahme 19, 20 ist zum Einrasten des Sicherungsmittels 13 in der jeweiligen Position des Sperrglieds 7 vorgesehen, derart dass die Bewegung des Sperrglieds 7 in der jeweiligen Position mittels des Sicherungsmittels 13 blockiert ist. Wie in Fig. 8 näher zu sehen ist, greift das Sicherungsmittel 13 mittels eines Rastzapfens 23 (siehe auch Fig. 5) einrastend in die erste Aufnahme 19 am Sperrglied 7 ein, wenn das Sperrglied 7 in der ersten Position befindlich ist. Dadurch wird eine Bewegung des Sperrglieds 7 aus der ersten Position verhindert, womit das Sicherungsmittel 13 in der Art einer Rückdrücksicherung für das Sperrglied 7 zwecks Erhöhung des Diebstahlschutzes wirkt. Wie weiter in Fig. 10 gezeigt ist, greift das Sicherungsmittel 13 mittels des Rastzapfens 23 einrastend in die zweite Aufnahme 20 am Sperrglied 7 ein, wenn das Sperrglied 7 in der zweiten Position befindlich ist. Dadurch wird eine Bewegung des Sperrglieds 7 aus der zweiten Position verhindert, womit das Sicherungsmittel 13 in der Art einer Sicherungseinrichtung für das Sperrglied 7 zum Schutz gegen Fehlfunktionen wirkt. Wie schließlich in der Fig. 9 zu sehen ist, ist das Sicherungsmittel 13 in einer zurückgezogenen Stellung, wenn das Sperrglied 7 zwischen der ersten und der zweiten Position bewegt wird, so dass eine Behinderung der Bewegung des Sperrgliedes 7 durch den Rastzapfen 23 ausgeschlossen ist.

Wie weiter aus Fig. 2 ersichtlich ist, ist das Sicherungsmittel 13 in der Art eines Schiebers ausgebildet. Das Sicherungsmittel 13 ist in einer Führung 22 im Sockel 11 beweglich angeordnet. Die Bewegung des Sicherungsmittels 13 wird dabei durch das Zusammenwirken eines Anschlags 34 im Sockel 11 mit einem Langloch 33 im Sicherungsmittel 13 begrenzt. Wie anhand der Fig. 6 zu erkennen ist, ist das Sicherungsmittel 13 mittels eines elastischen Elements 21, beispielsweise mittels einer Feder, mit einer in Richtung zur Aufnahme 19, 20 wirkenden Kraft belastet. Zwecks hoher Betriebs- und/oder Diebstahlsicherheit bietet es sich an, dass das Sicherungsmittel 13 und/oder das Sperrglied 7 aus Metall bestehen, beispielsweise aus Zinkdruckguss.

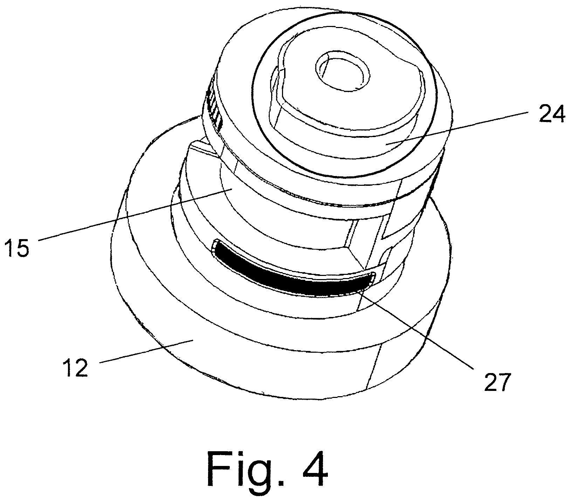

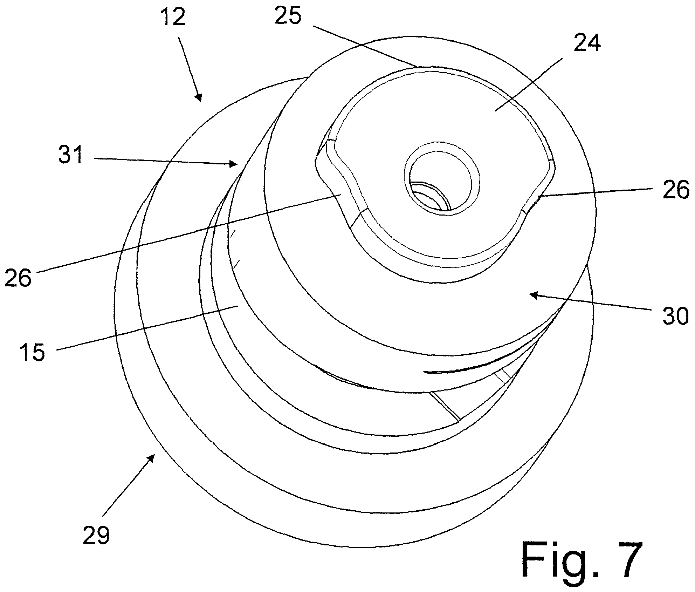

Für die Bewegung des Sicherungsmittels 13 ist eine in Fig. 4 oder Fig. 7 sichtbare Kulisse 24 am Antriebselement 12, und zwar an der zweiten Deckelfläche 30 (siehe Fig. 5), vorgesehen, wobei das Sicherungsmittel 13 mittels eines Nockens 32 in die Kulisse 24 eingreift. Wie anhand von Fig. 6 und Fig. 9 zu erkennen ist, ist das Sicherungsmittel 13 mittels der Kulisse 24 bei entsprechender Drehung des Antriebselements 12 gegen die vom elastischen Element 21 bewirkte Federkraft in der Führung 22 bewegbar, so dass der Rastzapfen 23 aus der Aufnahme 19, 20 ausrastet. Diese Bewegung des Sicherungsmittels 13 wird durch den exzentrisch ausgestalteten, ersten Abschnitt 25 der Kulisse 24 bewirkt, welcher in Fig. 7 näher zu sehen ist. Wie weiter anhand von Fig. 6 sowie Fig. 8 und Fig. 10 zu erkennen ist, ist das Sicherungsmittel 13 mittels der Kulisse 24 bei entsprechender Drehung des Antriebselements 12 zur Bewegung freigegeben, so dass der Rastzapfen 23 aufgrund der vom elastischen Element 21 bewirkten Federkraft in die Aufnahme 19, 20 einrastet. Zur Freigabe der Bewegung des Sicherungsmittels 12 dient der in Fig. 7 sichtbare zweite Abschnitt 26 der Kulisse 24, der einen gegenüber dem ersten Abschnitt 25 verringerten Radius aufweist.

Zur Detektierung der jeweiligen Position des Sperrglieds 7 ist ein mit dem Antriebselement 12 zusammenwirkendes Signalerzeugungsmittel vorgesehen. Das Signalerzeugungsmittel besteht aus einem Magnet 27 sowie einem nicht weiter gezeigten, mit dem Magnet 27 entsprechend zusammenwirkenden Hallsensor. Der Magnet 27 ist im und/oder am Antriebselement 12 angeordnet, wie in Fig. 5 gezeigt ist. Selbstverständlich kann als Signalerzeugungsmittel auch ein sonstiger Sensor verwendet werden, beispielsweise ein elektrischer Schalter.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann eine derartige Verriegelungseinrichtung 1 nicht nur als Lenkradverriegelung an der Lenkradsäule sondern auch an einem sonstigen funktionsrelevanten Bauteil und/oder Betriebsaggregat des Kraftfahrzeugs Verwendung finden. Bei einem solchen Bauteil und/oder Betriebsaggregat kann es sich beispielsweise um den Getriebeschalthebel, um den Wählhebel für ein Automatikgetriebe, um den Anlasser o. dgl. handeln. Des Weiteren kann eine solche Verriegelungseinrichtung 1 auch an einem sonstigen Schloss, beispielsweise bei einem Türschloss für das Kraftfahrzeug, für eine Immobilie o. dgl., Verwendung finden.

Bezugszeichen-Liste:
- 1:: Verriegelungseinrichtung / elektrische Lenkungsverriegelung
- 2:: Lenkrad
- 3:: Lenkradsäule
- 4:: Lenkwelle
- 5:: Trägeranordnung
- 6:: Lenkstockschalter
- 7:: Sperrglied
- 8:: Einrastposition
- 9:: Antrieb
- 10:: Gehäuse (der Verriegelungseinrichtung)
- 11:: Sockel (von Gehäuse)
- 12:: Antriebselement / Schneckenrad
- 13:: Sicherungsmittel
- 14:: Zapfen (am Sperrglied)
- 15:: Hubkurve (am Antriebselement)
- 16:: Doppelpfeil
- 17:: Führungsansatz
- 18:: Drehachse (von Antriebselement)
- 19:: erste Aufnahme (im Sperrglied)
- 20:: zweite Aufnahme (im Sperrglied)
- 21:: elastisches Element (für Sicherungsmittel)
- 22:: Führung (für Sicherungsmittel)
- 23:: Rastzapfen (am Sicherungsmittel)
- 24:: Kulisse (am Antriebselement)
- 25:: erster Abschnitt (an Kulisse)
- 26:: zweiter Abschnitt (an Kulisse)
- 27:: Magnet
- 28:: Druckfeder (für Sperrglied)
- 29:: erste Deckelfläche (von Antriebselement)
- 30:: zweite Deckelfläche (von Antriebselement)
- 31:: Mantelfläche (von Antriebselement)
- 32:: Nocken (an Sicherungsmittel)
- 33:: Langloch (im Sicherungsmittel)
- 34:: Anschlag

## Patentansprüche

1. Verriegelungseinrichtung, insbesondere elektrische Lenkungsverriegelung für ein Kraftfahrzeug, mit einem zwischen einer ersten und einer zweiten Position bewegbaren Sperrglied (7) zur Verriegelung eines funktionsrelevanten Bauteils, wie der Lenkwelle (4) in der Lenkradsäule (3), des Getriebeschalthebels o. dgl., wobei das Sperrglied (7) in der ersten Position in blockierenden Eingriff mit dem Bauteil steht und/oder in blockierenden Eingriff mit dem Bauteil bringbar ist und in der zweiten Position außer Eingriff mit dem Bauteil steht, mit einem Antriebselement (12) für die Bewegung des Sperrglieds (7) zwischen den beiden Positionen, und mit einem Sicherungsmittel (13) für das Sperrglied (7), **dadurch gekennzeichnet, dass** das Sicherungsmittel (13) sowohl zur Zusammenwirkung mit dem Sperrglied (7) in der ersten Position als auch zur Zusammenwirkung mit dem Sperrglied (7) in der zweiten Position, ausgebildet ist, wobei insbesondere das Sicherungsmittel (13) in der Art einer Rückdrücksicherung für das in der ersten Position befindliche Sperrglied (7) zur Verhinderung von Manipulationen sowie in der Art einer Sicherungseinrichtung zum Sichern des Sperrglieds (7) in der zweiten Position gegen unbeabsichtigte Bewegung in die erste Position wirkt, dass zwei Aufnahmen (19, 20) im Sperrglied (7) für das Zusammenwirken des Sicherungsmittels (13) mit dem Sperrglied (7) vorgesehen sind, wobei insbesondere jeweils eine Aufnahme (19, 20) zum Einrasten des Sicherungsmittels (13) in der jeweiligen Position vorgesehen ist, derart dass die Bewegung des Sperrglieds (7) in der jeweiligen Position mittels des Sicherungsmittels (13) blockiert ist, und dass eine Kulisse (24) am Antriebselement (12) für die Bewegung des Sicherungsmittels (13) gegen die vom elastischen Element (21) bewirkte Kraft aus der Aufnahme (19, 20) und/oder zur Freigabe der Bewegung des Sicherungsmittels (13) mittels der von einem elastischen Element (21) bewirkten Kraft in die Aufnahmen (19, 20) vorgesehen ist.

2. Verriegelungseinrichtung nach Anspruch 1, **dadurch gekennzeichnet, dass** ein Gehäuse (10) vorgesehen ist, dass vorzugsweise das Gehäuse (10) einen Sockel (11) umfasst, dass weiter vorzugsweise das Sperrglied (7) im Sockel (11) bewegbar geführt ist, und dass noch weiter vorzugsweise der Sockel (11) aus Metall besteht.

3. Verriegelungseinrichtung nach Anspruch 1 oder 2, **dadurch gekennzeichnet, dass** das Antriebselement (12) in der Art eines Schneckenrades ausgebildet ist, dass vorzugsweise eine Hubkurve (15) am Antriebselement (12) befindlich ist, dass weiter vorzugsweise das Sperrglied (7) mittels eines Zapfens (14) in die Hubkurve (15) eingreift, derart dass bei Antrieb des Antriebselements (12) das Sperrglied (7) zwischen den beiden Positionen bewegbar ist, und dass noch weiter vorzugsweise ein Elektromotor zum Antrieb, insbesondere zur Drehung, des Antriebselements (12) vorgesehen ist.

4. Verriegelungseinrichtung nach einem der Ansprüche 1 bis 3, **dadurch gekennzeichnet, dass** das Sicherungsmittel (13) in der Art eines Schiebers ausgebildet ist, und dass vorzugsweise das Sicherungsmittel (13) mittels eines elastischen Elements (21), insbesondere mittels einer Feder, mit einer in Richtung zur Aufnahme (19, 20) wirkenden Kraft belastet ist.

5. Verriegelungseinrichtung nach einem der Ansprüche 1 bis 4, **dadurch gekennzeichnet, dass** das Sicherungsmittel (13) in einer Führung (22) im Sockel (11) beweglich angeordnet ist, dass vorzugsweise das Sicherungsmittel (13) aus Metall besteht, und dass weiter vorzugsweise das Sperrglied (7) aus Metall besteht.

6. Verriegelungseinrichtung nach einem der Ansprüche 1 bis 5, **dadurch gekennzeichnet, dass** das Antriebselement (12) in etwa zylinderförmig mit einer ersten Deckelfläche (29), einer zweiten Deckelfläche (30) sowie einem zwischen den beiden Deckelflächen (29, 30) befindlichen Mantelfläche (31) ausgestaltet ist, dass vorzugsweise die Hubkurve (15) an der Mantelfläche (31) befindlich ist, dass weiter vorzugsweise die Kulisse (24) an der zweiten Deckelfläche (30) befindlich ist, und dass noch weiter vorzugsweise das Sicherungsmittel (13) mittels eines Nockens (32) in die Kulisse (24) eingreift.

7. Verriegelungseinrichtung nach einem der Ansprüche 1 bis 6, **dadurch gekennzeichnet, dass** ein mit dem Antriebselement (12) zusammenwirkendes Signalerzeugungsmittel für die jeweilige Position des Sperrglieds (7) vorgesehen ist, dass vorzugsweise das Signalerzeugungsmittel aus einem Magnet (27) sowie einem Hallsensor besteht, und dass weiter vorzugsweise der Magnet (27) im und/oder am Antriebselement (12) angeordnet ist.

## Claims

1. Locking device, in particular electric steering lock for a motor vehicle, with a locking member (7) movable between a first and a second position for locking a functionally relevant component, such as the steering shaft (4) in the steering wheel column (3), the transmission shift lever or the like, wherein the locking member (7) in the first position is in blocking engagement with the component and/or can be brought into blocking engagement with the component and in the second position is out of engagement with the component, with a drive element (12) for the movement of the locking member (7) between the two positions, and with a securing means (13) for the locking member (7), **characterised in that in that** the securing means (13) is designed both for interacting with the locking member (7) in the first position and for interacting with the locking member (7) in the second position, the securing means (13) acting, in particular, in the manner of a push-back securing device for the locking member (7) located in the first position in order to prevent manipulation and in the manner of a securing device for securing the locking member (7) in the second position against unintentional movement into the first position, **in that** two receptacles (19, 20) are provided in the locking member (7) for the cooperation of the securing means (13) with the locking member (7), in particular one receptacle (19, 20) in each case being provided for engaging the securing means (13) in the respective position in such a way that the movement of the locking member (7) in the respective position is blocked by means of the securing means (13), and **in that** a slotted link (24) is provided on the drive element (12) for moving the securing means (13) out of the receptacle (19, 20) against the force caused by the elastic element (21) and/or for releasing the movement of the securing means (13) into the receptacles (19, 20) by means of the force caused by an elastic element (21).

2. Locking device according to claim 1, **characterised in that** a housing (10) is provided, that preferably the housing (10) comprises a base (11), that further preferably the locking member (7) is movably guided in the base (11), and that still further preferably the base (11) consists of metal.

3. Locking device according to claim 1 or 2, **characterised in that** the drive element (12) is designed in the manner of a worm wheel, that preferably a lifting cam (15) is located on the drive element (12), that further preferably the locking member (7) engages in the lifting cam (15) by means of a pin (14), in such a way that when the drive element (12) is driven, the locking member (7) can be moved between the two positions, and **in that** still further preferably an electric motor is provided for driving, in particular for rotating, the drive element (12).

4. Locking device according to one of claims 1 to 3, **characterised in that** the securing means (13) is designed in the manner of a slide, and **in that** preferably the securing means (13) is loaded by means of an elastic element (21), in particular by means of a spring, with a force acting in the direction of the receptacle (19, 20).

5. Locking device according to one of claims 1 to 4, **characterised in that** the securing means (13) is movably arranged in a guide (22) in the base (11), **in that** preferably the securing means (13) is made of metal, and **in that** further preferably the locking member (7) is made of metal.

6. Locking device according to one of claims 1 to 5, **characterised in that** the drive element (12) is approximately cylindrical with a first cover surface (29), a second cover surface (30) and an outer surface (31) located between the two cover surfaces (29, 30), **in that** the lifting cam (15) is preferably located on the lateral surface (31), **in that** the link (24) is further preferably located on the second cover surface (30), and **in that** the securing means (13) engages in the link (24) by means of a cam (32).

7. Locking device according to one of claims 1 to 6, **characterised in that** a signal generating means cooperating with the drive element (12) is provided for the respective position of the locking member (7), **in that** preferably the signal generating means consists of a magnet (27) and a Hall sensor, and **in that** further preferably the magnet (27) is arranged in and/or on the drive element (12).

## Revendications

1. Dispositif de verrouillage, en particulier verrouillage électrique de la direction pour un véhicule automobile, avec un organe de blocage (7) mobile entre une première et une deuxième position pour le verrouillage d'un composant important pour le fonctionnement, comme l'arbre de direction (4) dans la colonne de direction (3), le levier de changement de vitesse ou similaire, l'élément de blocage (7) étant, dans la première position, en prise de blocage avec le composant et/ou pouvant être amené en prise de blocage avec le composant et étant, dans la deuxième position, hors de prise avec le composant, avec un élément d'entraînement (12) pour le mouvement de l'élément de blocage (7) entre les deux positions, et avec un moyen de sécurité (13) pour l'élément de blocage (7), caractérisé, que le moyen de sécurité (13) est conçu aussi bien pour coopérer avec l'organe de blocage (7) dans la première position que pour coopérer avec l'organe de blocage (7) dans la deuxième position, le moyen de sécurité (13) agissant en particulier à la manière d'une sécurité anti-recul pour l'organe de blocage (7) se trouvant dans la première position pour empêcher des manipulations ainsi qu'à la manière d'un dispositif de sécurité pour sécuriser l'organe de blocage (7) dans la deuxième position contre un mouvement involontaire dans la première position, en ce que deux logements (19, 20) sont prévus dans l'organe de blocage (7) pour la coopération du moyen de sécurité (13) avec l'organe de blocage (7), un logement (19, 20) étant notamment prévu à chaque fois pour l'encliquetage du moyen de sécurité (13) dans la position respective, de sorte que le mouvement de l'organe de blocage (7) dans la position respective est bloqué au moyen du moyen de sécurité (13), et en ce qu'une coulisse (24) est prévue sur l'élément d'entraînement (12) pour le mouvement du moyen de blocage (13) à l'encontre de la force provoquée par l'élément élastique (21) hors du logement (19, 20) et/ou pour la libération du mouvement du moyen de blocage (13) au moyen de la force provoquée par un élément élastique (21) dans les logements (19, 20).

2. Dispositif de verrouillage selon la revendication 1, **caractérisé en ce qu'**il est prévu un bo tier (10), **en ce que**, de préférence, le bo tier (10) comprend un socle (11), **en ce que**, de préférence encore, l'élément de blocage (7) est guidé de manière mobile dans le socle (11), et **en ce que**, de préférence encore, le socle (11) est en métal.

3. Dispositif de verrouillage selon la revendication 1 ou 2, **caractérisé en ce que** l'élément d'entraînement (12) est conçu à la manière d'une roue à vis sans fin, **en ce qu'**une came de levage (15) se trouve de préférence sur l'élément d'entraînement (12), **en ce que**, de préférence encore, l'organe de blocage (7) s'engage dans la came de levage (15) au moyen d'un tourillon (14), de telle sorte que, lors de l'entraînement de l'élément d'entraînement (12), l'organe de blocage (7) peut être déplacé entre les deux positions, et **en ce qu'**il est encore prévu de préférence un moteur électrique pour l'entraînement, notamment pour la rotation, de l'élément d'entraînement (12).

4. Dispositif de verrouillage selon l'une des revendications 1 à 3, **caractérisé en ce que** le moyen de sécurité (13) est conçu à la manière d'un coulisseau, et **en ce que**, de préférence, le moyen de sécurité (13) est sollicité au moyen d'un élément élastique (21), en particulier au moyen d'un ressort, avec une force agissant en direction du logement (19, 20).

5. Dispositif de verrouillage selon l'une des revendications 1 à 4, **caractérisé en ce que** le moyen de sécurité (13) est disposé de manière mobile dans un guide (22) dans le socle (11), **en ce que** le moyen de sécurité (13) est de préférence en métal et **en ce que** l'élément de blocage (7) est de préférence en métal.

6. Dispositif de verrouillage selon l'une des revendications 1 à 5, **caractérisé en ce que** l'élément d'entraînement (12) est conçu approximativement en forme de cylindre avec une première surface de couvercle (29), une deuxième surface de couvercle (30) ainsi qu'une surface d'enveloppe (31) se trouvant entre les deux surfaces de couvercle (29, 30), **en ce que**, de préférence, la came de levage (15) se trouve sur la surface d'enveloppe (31), **en ce que**, de préférence encore, la coulisse (24) se trouve sur la deuxième surface de couvercle (30), et **en ce que**, de préférence encore, le moyen de sécurité (13) s'engage dans la coulisse (24) au moyen d'une came (32).

7. Dispositif de verrouillage selon l'une des revendications 1 à 6, **caractérisé en ce qu'**il est prévu un moyen de production de signaux coopérant avec l'élément d'entraînement (12) pour la position respective de l'organe de blocage (7), **en ce que**, de préférence, le moyen de production de signaux est constitué d'un aimant (27) ainsi que d'un capteur à effet Hall, et **en ce que**, de préférence encore, l'aimant (27) est disposé dans et/ou sur l'élément d'entraînement (12).
